# EUROPÄISCHE PATENTSCHRIFT

(11) **EP 1 425 142 B1**
(45) Veröffentlichungstag und Bekanntmachung des Hinweises auf die Patenterteilung: **13.07.2005**
(21) Anmeldenummer: 02754369.3
(22) Anmeldetag: 16.07.2002
(51) Int. Cl.: B26D 7/20

(54) **VORRICHTUNG ZUR LAGERUNG VON FLÄCHIGEN MATERIALIEN BEIM TRENNEN MITTELS EINER TRENNEINRICHTUNG SOWIE TRENNVERFAHREN**
DEVICE FOR ACCOMMODATING FLAT MATERIALS DURING SEPARATION BY A SEPARATING DEVICE, AND A SEPARATING METHOD
DISPOSITIF POUR LOGER DES MATERIAUX PLATS LORS DE LEUR SECTIONNEMENT AU MOYEN D'UN DISPOSITIF DE COUPE, ET PROCEDE DE SECTIONNEMENT

(30) Priorität: 24.07.2001 DE 20112006 U
(43) Veröffentlichungstag der Anmeldung: 09.06.2004
(73) Patentinhaber: Diem, Reinhard, 71083 Herrenberg (DE)
(72) Erfinder: Diem, Reinhard, 71083 Herrenberg (DE)
(74) Vertreter: Klocke, Peter, Dipl.-Ing.
(86) Internationale Anmeldenummer: PCT/DE2002/002601
(87) Internationale Veröffentlichungsnummer: WO 2003/016004

(56) Entgegenhaltungen:
- DE-U- 8 518 255
- FR-A- 2 713 130
- JP-A- 63 232 999
- NL-C- 1 000 822
- US-A- 4 790 224

## Beschreibung

### Gebiet der Erfindung

Die vorliegende Erfindung betrifft eine Auflagevorrichtung zur Lagerung von flächigen Materialien beim Trennen von auf einem Auflagetisch aufliegenden flächigen Materialien mittels einer Trenneinrichtung gemäß dem Gegenstand des Anspruchs 1, sowie ein Trennverfahren gemäß dem Gegenstand des Anspruchs 10. Eine solche Vorrichtung sowie ein solches Verfahren ist aus US 4 790 224 A bekannt.

### Stand der Technik

Beim Trennen von flächigen Materialien beispielsweise mittels eines Lasers, Schneidbrenners, Wasserstrahls oder eines Fräsers in einem CNC-Bearbeitungszentrum ist es erforderlich, dass unter der jeweiligen Trenneinrichtung und dem zu trennenden Material ein Freiraum existiert, damit der Trennschnitt ungestört und präzise durchgeführt werden kann und zudem die Auflage selbst nicht beschädigt wird. Insbesondere bei Lasertrenneinrichtungen ist es üblich, das flächige Material auf Gitterrosten oder auswechselbaren Zinken einer Gabel zu lagern (siehe beispielsweise DE 199 05 005 A1), wobei jedoch bei einem Trennvorgang die Auflagen trotzdem beschädigt werden. Nach einer gewissen Zeit muss die Auflage dann ausgewechselt werden, da die nach und nach reduzierte Auflagefläche bei einzelnen Spitzen auf denen die Teile aufliegen, insbesondere bei kleineren Teilen, zu einem Kippen der Teile führt, so dass ein ordnungsgemäßes Trennen nicht mehr möglich ist bzw. die laseroptik beim nächsten Passieren dieser Stelle beschädigt wird. Dazu kommt, dass bei neuen Gitterrosten oder Gabeln Verwirbelungen des den Laser umgebenden Schutzgases entstehen, die zu unsauberen Schnitten führen.

Aus der DE 196 42 159 A1 ist eine Vorrichtung zur Bearbeitung von Flachmaterial, insbesondere von Stoffbahnen bekannt, bei der auch einzelne Lagen von Flachmaterial zuverlässig bei einer losen Auflage bearbeitet werden können. Dazu weist die Auflage eine flexible Folie auf, die an zwei Enden befestigt ist und verfahrbare Umlenkmittel zum Umlenken der Folie im Bearbeitungsbereich enthält. Durch die verfahrbaren an sich starren Umlenkmittel wird ein Spalt im Bearbeitungsbereich mit der Bearbeitungseinheit hin- und herbewegt. Diese Vorrichtung ist insbesondere zum Bearbeiten von Flachmaterial, insbesondere von Stoffbahnen, Gardinen oder dergleichen, jedoch nicht für schweres, plattenförmiges Material geeignet.

Die US 4 058 040 beschreibt einen geschlitzten Bearbeitungstisch für eine Hochdruckflüssigkeitsschneideinrichtung mit einem auf Schienen bewegbaren Rahmen für die Düse. Ein flexibles Tragmaterial ist an beiden Enden fixiert und wird im Bereich der Düse über Rollen umgelenkt, so dass bei einer Bewegung des Rahmens der Spalt mit der Düse mitbewegt wird. Die Breite des Spaltes des Auflagetisches wird durch den fixen Abstand von Umlenkstangen bestimmt und ist nicht variierbar. Die Rahmenanordnung mit der Düse und den Umlenkstangen wird relativ zu einem äußeren Rahmen, an dem das flexible Tragmaterial befestigt ist, bewegt.

Die WO 95/15837 beschreibt ebenfalls eine Wasserstrahlschneidmaschine mit einer Auflage, bei der durch umgelenkte Transportbänder der Spalt entsprechend der Bewegung der Düse verschoben werden kann.

Auch die DE 39 17 253 C2 beschreibt eine Vorrichtung zum Schneiden von geschichtetem Bandmaterial, bei der ein Haltegurt zur Bildung einer Aussparung unterhalb des Schneidekopfes über Rollen umgelenkt werden. Beim Verfahren der Trenneinrichtung wird der Spalt mitbewegt.

Aus der DE 199 43 043 A1 ist eine Maschine und ein Verfahren zum thermischen Schneiden, insbesondere Laserschneiden, von Werkstücken bekannt, bei dem es darum geht, sowohl die geschnittenen Werkstücke als auch die Werkstückabfälle abzuräumen, ohne dass beim Erkalten irgendwelche Teile mit der Werkstückauflage verschweißt werden. Hierzu werden verschiedene Maßnahmen ergriffen, die sich insbesondere durch einen Anschlag auszeichnen, wobei der Anschlag und die Werkstückauflage unter Lösen von an letzterer haftendem Schneidgut relativ zueinander bewegbar sind.

Aus diesem Stand der Technik ist ersichtlich, dass insbesondere für das Laserschneiden keine Vorrichtung bekannt ist, die einerseits das Anhaften der Werkstückteile an dem Auflagetisch verhindert und andererseits ein einfaches Trennen und Abräumen der Werkstücke und auch des Abfalls ermöglicht.

### Zusammenfassung der Erfindung

Der vorliegenden Erfindung liegt daher die Aufgabe zu Grunde, hier Abhilfe zu schaffen und eine Möglichkeit vorzuschlagen, mit der eine stabile Auflage erreicht werden kann und bei der gleichzeitig eine saubere Trennung des Materials und ein gezieltes Abräumen des Materials als auch Schneidabfalls möglich ist.

Diese Aufgabe wird erfindungsgemäß durch eine Vorrichtung mit den Merkmalen des Anspruchs 1 gelöst. Weitere vorteilhafte Ausgestaltungen sind den jeweiligen rückbezogenen Unteransprüchen zu entnehmen. Die Aufgabe wird außerdem durch eine Maschine zum Schneiden von plattenförmigen Materialien mit einer entsprechend gestalteten Auflagevorrichtung gelöst.

Gemäß der Erfindung werden zwei voneinander beabstandete, in der Auflagefläche variable Auflagetische mit einem Spalt in X-Vorschubrichtung zwischen den Auflageflächen unter der Trenneinrichtung angeordnet und anschließend der Spalt bei einer Bewegung der Trenneinrichtung in der Y-Vorschubrichtung durch Verändern der Größe der Auflagetische wenigstens in der direkten Umgebung der Trenneinrichtung angepasst. Durch die Veränderung der Größe der Auflagetische wird entweder der Spalt in seiner Breite vergrößert oder bei gleicher Breite mit der Trenneinrichtung mitbewegt. Die Vergrößerung des Spalts kann bei kleineren auszuschneidenden Teilen vorteilhaft oder auch nachteilig sein. Als vorteilhaft ist anzusehen, wenn diese kleineren Teile bereits in einen darunter stehenden Behälter fallen und damit abgeräumt werden; nachteilig kann sein, wenn die Teile je nach Trennvorgang zu einem unerwünschten Zeitpunkt bereits herunterfallen. Steuerungstechnisch ist dies einfach zu realisieren, da das Signal für die Bewegungen der Trenneinrichtung in Y-Vorschubrichtung gleichzeitig zur Veränderung der Größe der Auflageflächen der ersten und zweiten Auflagetisches benutzt werden kann. Der Spalt wird durch reziprokes Verändern der Auflagefläche des ersten und zweiten Auflagetisches verschoben, so dass mit der Vergrößerung der einen Auflagefläche eine Verkleinerung der anderen Auflagefläche einhergeht. Grundsätzlich ist es möglich, durch eine Vielzahl von Steuerungen den Spalt lediglich in dem Bereich der Trenneinrichtung zu verbreitern oder zu verschieben. Vorzugsweise wird der Spalt jedoch über die gesamte Breite der Auflage verändert. Die Bewegung des Spaltes erfolgt synchron mit der Trenneinrichtung.

Jeder Auflagetisch weist eine einseitig fixierte und in Y-Richtung bewegbare Trägeranordnung auf. Die Trägeranordnungen sind während des Trennvorgangs zum Bewegen des Spalts entsprechend der Bewegung der Trenneinrichtung reziprok bewegbar. Nach dem Trennvorgang sind die Trägeranordnungen zum gezielten Abräumen ausgeschnittener gleichgroßer Teile unabhängig voneinander zur Vergrößerung des Spaltes bewegbar oder zum Abräumen unterschiedlicher Teile in Abhängigkeit von deren Größe mit entsprechender Spaltbreite entgegesetzt reziprok bewegbar. Damit ist es möglich, den Spalt auf eine gewünschte Breite einzustellen und dann zuerst die kleineren ausgeschnittenen Teile in einen darunter befindlichen Behälter und anschließend die größeren Teile in einen anderen darunter befindlichen Behälter abzuräumen.

Gemäß einer Ausführungsform wird die Vergrößerung der einen Auflage und die gleichzeitige Verkleinerung der anderen Auflage durch Umlenken von einzelnen miteinander verbundenen Gliedern einer die jeweilige Auflagefläche bildenden Gliederkette durchgeführt. Je nach Ausbildung kann die Umlenkung im Bereich des Spaltes oder am entgegengesetzten Rand jeder Auflage durchgeführt werden.

Der erste und zweite Auflagetisch weist vorzugsweise jeweils eine Gliederkette mit einer Vielzahl von Gliedern mit einer oberen Flachseite, die die jeweilige Auflagefläche bildet, sowie eine am einen Ende jeder Auflagefläche angeordnete Umlenkeinrichtung auf. Durch Umlenken der jeweiligen Gliederkette kann die Auflagefläche den entsprechenden Erfordernissen angepasst und damit der Spalt entweder vergrößert oder verschoben werden. Die Umlenkeinrichtung kann, wie bereits vorstehend angedeutet, je nach Ausgestaltung im Bereich des Spaltes oder am entgegengesetzten Ende der Auflagefläche angeordnet sein.

Bei der Trägeranordnung für die Gliederkette kann es sich in dieser Richtung verschiebbare Trägerstangen, auf Rollen oder Luftkissen auf dem Boden verfahrbare Auflagen, oder vorteilhafterweise um Tragarme handeln, die einseitig fixiert sind. Letztere sind dann zweckmäßiger Weise teleskopartig ausfahrbar und weisen an dem dem Spalt zugewandten Ende Umlenkrollen auf. Über die Breite eines Auflagetisches sind somit nur zwei steuerbare teleskopartige Tragarme erforderlich, während die dazwischen liegenden, evtl. für die Tragkraft notwendigen Teleskoparme nicht gesteuert werden müssen. An den freien Enden können die Tragarme über eine Stange, die auch entsprechende Lenkrollen trägt, verbunden sein. Eine aufwendigere Möglichkeit besteht darin, für einen Auflagetisch mehrere Gliederketten vorzusehen, die gesondert steuerbar sind, so dass der Spalt nur im Bereich der Trenneinrichtung verändert wird.

Vorteilhaft ist die mechanische Verbindung der Gliederketten mittels eines Seilzugs oder dergleichen, so dass bei einer Vergrößerung der einen Auflagefläche gleichzeitig eine Verkleinerung der anderen Auflagefläche eintritt. Dabei wird der Spalt in seiner Breite konstant gehalten und mit der Trenneinrichtung in Y-Richtung bewegt.

Zu dem vorstehend erwähnten Abräumen kann der Spalt der durch Verkürzen des Seilzugs vergrößert werden und dann wieder durch die reziproke Veränderung der Auflageflächen bewegt werden. Sofern eine vollständige Abräumung auf einmal erfolgen soll, wird entweder die eine Auflagefläche oder auch beide Auflageflächen auf die minimalste Größe reduziert.

Beim Trennfräsen können im Hinblick auf leichte Materialien, die an der jeweiligen Auflage fixiert sein müssen, damit sie sich während des Trennvorganges nicht bewegen, die einzelnen Kettenglieder als Hohlprofile ausgebildet sein, die an einer Vakuumquelle angeschlossen sind und wenigstens auf der Oberseite Luftöffnungen haben, um damit das zu bearbeitende Material anzusaugen und festzuhalten. Durch entsprechende Dichtungen und Abschlüsse kann erreicht werden, dass die in dem Bereich des Spaltes hinzukommenden beziehungsweise abgehenden Kettenglieder mit angeschlossen beziehungsweise von der Saugquelle getrennt werden.

Durch die Verwendung von Kettengliedern als Hohlprofile ist es auch möglich, eine Kühlflüssigkeit durch diese Kettenglieder fließen zu lassen, so dass das zu trennende Teil gleich im Bereich der Trennstelle gekühlt wird. Hierzu werden ebenfalls über eine Ventileinrichtung sukzessiv die Kettenglieder miteinander verbunden und an den Kühlmittelstrom angeschlossen.

Der vorliegenden Erfindung liegt auch die Aufgabe zugrunde, eine Möglichkeit anzugeben, mit der der erfindungsgemäße Auflagetisch einfach von daraufliegenden Teilen befreit werden kann.

Diese Aufgabe wird mit einem Verfahren gemäß den Merkmalen des nebengeordneten Verfahrensanspruchs gelöst. Danach wird der Spalt während des Schneidens zwischen den Auflagetischen bis auf das Minimum geschlossen, das für den Durchtritt der jeweiligen Trenneinrichtung erforderlich ist. Die Vergrößerung bzw. Verkleinerung der Auflagefläche der jeweiligen Auflagetische erfolgt synchron zur Y-Vorschubrichtung. Nachdem alle Teile aus dem plattenförmigen Material herausgetrennt sind, wird der Spalt auf eine Größe gebracht, die geringfügig größer ist als die der Teile. Der Spalt wird dann über die gesamte Fläche bewegt, so dass die abgetrennten Teile durch den Spalt hindurch, beispielsweise in einen darunter befindlichen Warenkorb fallen können. Damit erfolgt auf einfach Weise die Teilegewinnung.

Als nächstes kann noch das Abräumen des Restmaterials dadurch erfolgen, dass die Spaltbreite auf das Maximum vergrößert wird, so dass die Plattenreste in einen bereits dafür bereitgehaltenen Abfallkorb fallen können.

### Kurzbeschreibung der Figuren

Nachfolgend wird die Erfindung anhand eines Ausführungsbeispiels näher erläutert. Es stellen dar:
- Figur 1: eine schematische prinzipielle Darstellung einer Auflagevorrichtung in der Seitenansicht,
- Figur 2: die schematische Draufsicht auf eine Auflage mit Teleskopauszügen in zusammengefahrenen (A), auseinandergefahrenen (B) Zustand sowie ein Querschnitt durch die Gliederkette (C);
- Figur 3: eine schematische Seitenansicht einer Trägeranordnung mit Teleskopzügen und Kettengliedern, die als Hohlprofil ausgebildet sind;
- Figur 4: die Seitenansicht eines Kettengliedes mit Hohlprofil; und
- Figur 5: die Draufsicht auf mehrere Hohlprofil-Kettenglieder.

### Beschreibung eines bevorzugten Ausführungsbeispiels

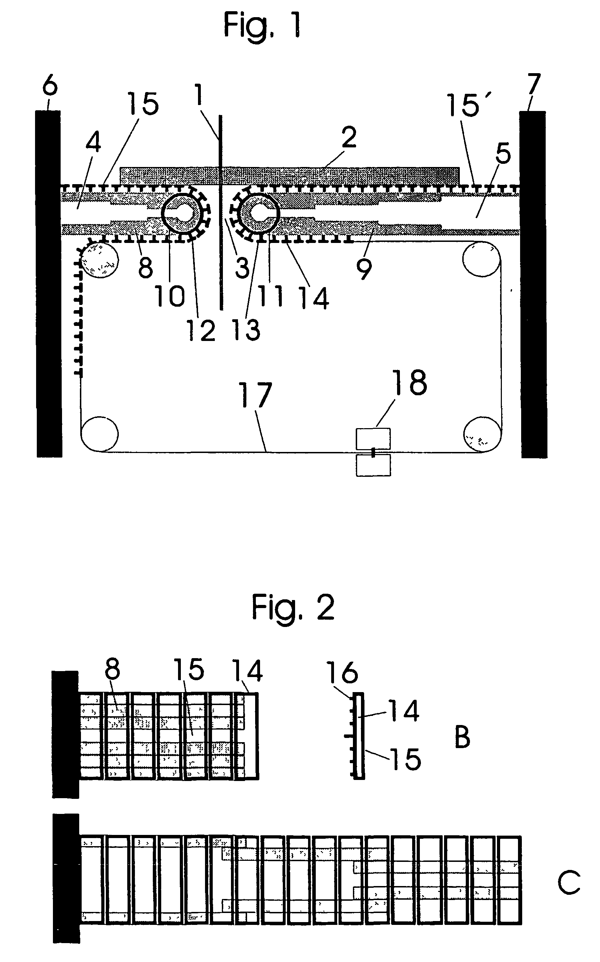

Figur 1 zeigt das erfindungsgemäße Prinzip am Beispiel einer Auflagevorrichtung für Laserschneidgeräte. Wie aus der Figur ersichtlich ist der Laserstrahl 1, der das Werkstück 2 durchtrennt, genau über einem Spalt 3 zwischen zwei Auflagetischen 4 und 5 angeordnet. Die Auflagetische 4 und 5 sind einseitig an einem Rahmen 6 und 7 fixiert und weisen jeweils wenigstens zwei teleskopartig ausfahrbare Tragarme 8 und 9 auf. Diese können als Öldruckteleskop oder in sonstiger dem Fachmann geläufigen und für den Anwendungsfall geeigneten Art und Weise ausgebildet sein. Über die Breite des jeweiligen Auflagetisches verteilt; können je nach Tragkraft mehrere Tragarme 8, 9 angeordnet sein, wobei die steuerbaren Tragarme 8, 9 beispielsweise über ein entsprechende Stange mit den nicht steuerbaren Tragarmen verbunden sind, um diese mit zu bewegen. Am freien Ende der Tragarme 8, 9 befindet sich eine Umlenkung beispielsweise in Form einer Rolle, die in der Figur 1 schematisch dargestellt und mit den Bezugszeichen 10 beziehungsweise 11 gekennzeichnet ist. Auf den Tragarmen 8, 9 liegt jeweils eine Gliederkette 12, 13 auf, deren einzelnen Kettenglieder 14 die Oberseite der Auflageflächen 15, 15' bilden. Auf der Unterseite weisen die einzelnen Kettenglieder, wie in der Figur 2C dargestellt beispielsweise Führungen 16 auf die in entsprechenden Kerben in den Figuren 2A und 2B beispielhaft dargestellten Teleskopauszügen 8 einliegen. Am freien Ende der Tragarme 8, 9 werden die Gliederketten 12, 13 mittels der Rollen 10, 11 umgelenkt, so dass bei einer Bewegung der Tragarme die Auflageflächen 15, 15' entsprechend vergrößert oder verkleinert werden. In dem Ausführungsbeispiel sind die freien Enden der Gliederketten 12, 13 über einen Seilzug 17 miteinander verbunden, so dass die Vergrößerung der Auflagefläche 15 bzw. 15' auf einer Auflage gleichzeitig die Verkleinerung der Auflage 15' bzw. 15 auf der anderen Auflage bewirkt. Zur Steuerung kann im Bereich des Seilzugs eine Lichtschranke 18 vorgesehen sein, über die die Position bestimmt wird. Steuerungstechnisch wird das Signal, das den Laser in Y-Richtung bewegt gleichzeitig auch auf die jeweiligen Steuerungseinrichtungen für die Tragarme verwendet.

Figur 2 zeigt in der Draufsicht die Auflagefläche 15 des Auflagetisches 8 mit den einzelnen Kettengliedern 14, die auf Teleskopauszügen als Tragarme aufliegen. Figur 2A zeigt die minimale Auflagefläche und Figur 2B die maximale Auflagefläche.

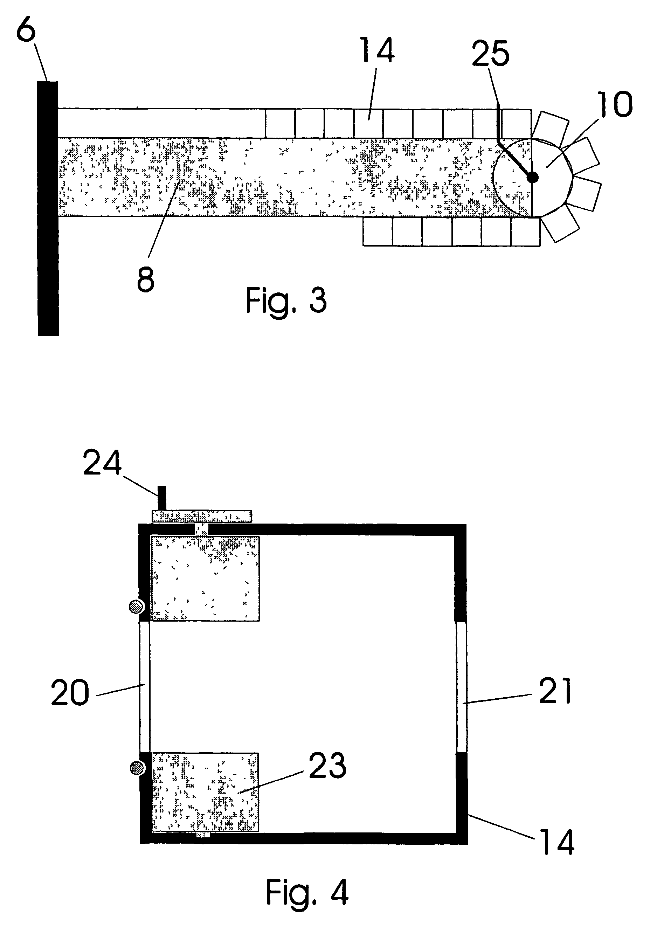

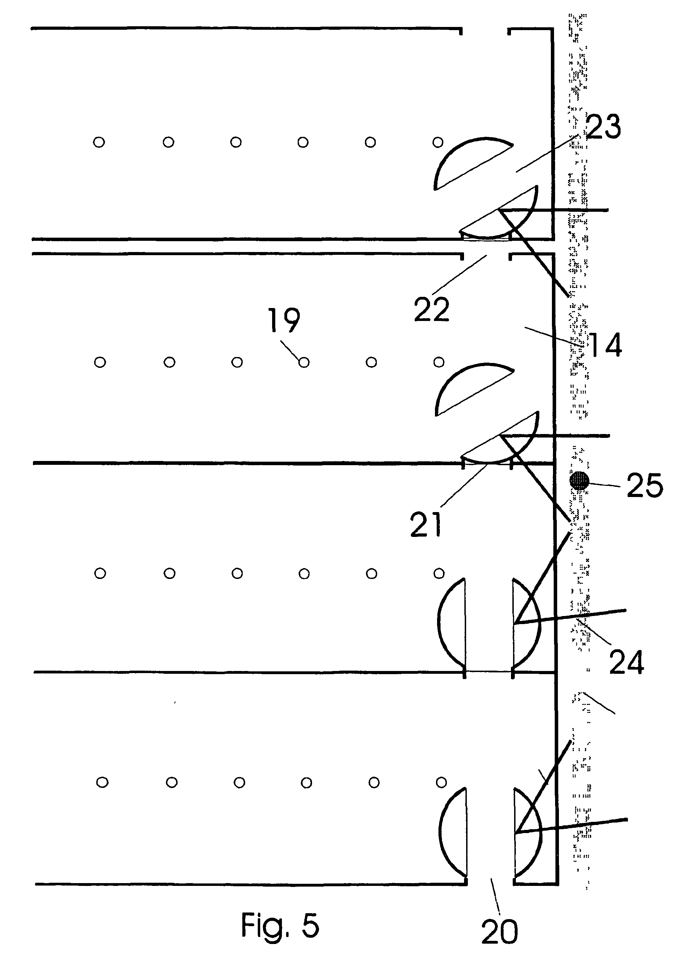

Zur Bereitstellung einer Ansaugung bei zu fräsenden Materialien können bei der in den Figuren dargestellten Ausführungsform Kettenglieder als Hohlprofil vorgesehen werden, die wie in der Figur 5 dargestellt an der Oberseite Löcher 19 zum Ansaugen des Materials aufweisen und über jeweils eine Öffnung 20, 21 in den den beiden angrenzenden Kettengliedern zugewandten Seiten mit diesen und einer Vakuumquelle verbindbar sind. Damit wird gemäß Figur 3 von dem Rahmen 6, 7 ausgehend, über die Kettenglieder Luft abgesaugt. Damit nur die wirklich als Auflage dienenden Kettenglieder wirksam sind, müssen die dem Rahmen 6, 7 zugewandten Öffnungen über eine geeignete Ventileinrichtungen 22 verschließbar sein. Diese geben die jeweilige Öffnung 21 der über die Umlenkung gelaufenen Kettenglieder schrittweise frei, so dass ein Kettenglied 14 nach dem anderen über die vorangegangenen an die Saugluft angeschlossen bzw. umgekehrt wieder getrennt werden. Dies kann beispielsweise durch ein Drehventil 23 mit einem von außen mittels eines Stellstiftes 25 betätigbaren Drehhebel 24 automatisch erfolgen. In der Figur 5 ist die äußere Betätigung lediglich prinzipiell angedeutet. Hier gibt es viele Möglichkeiten, um ein Öffnen und Schließen des Drehventils 23 über einen Drehhebel 24 zu realisieren. Sofern die Kettenglieder 14 mit einer Kühlflüssigkeit versorgt werden sollen, müssen an beiden Öffnungen 20, 21 entsprechende Ventileinrichtungen, beispielsweise Drehventile 23 wie in der Figur 5 dargestellt, eingesetzt werden. Außerdem erübrigen sich selbstverständlich die in der Figur 5 dargestellten Löcher 19.

## Patentansprüche

1. Auflagevorrichtung zum Lagern von plattenförmigen Materialien in einer Trenneinrichtung, wobei die Trenneinrichtung während des Trennvorganges in X/Y-Richtungen bewegbar ist und die X-Vorschubrichtung geradeaus und die Y-Vorrichtung quer dazu ist, mit einen ersten Auflagetisch (4) mit einer ersten Auflagefläche (15) und einem zweiten Auflagetisch (5) mit einer zweiten Auflagefläche (15'), wobei die beiden Auflagetische voneinander beabstandet sind und einen Spalt (3) bilden, der sich zumindest unter der Trenneinrichtung (1) befindet, und der Spalt (3) durch Verändern der Größe des ersten und zweiten Auflagetisches in Y-Richtung variierbar ist, **dadurch gekennzeichnet, dass** jeder Auflagetisch (4, 5) eine einseitig fixierte und in Y-Richtung bewegbare Trägeranordnung (8, 9) aufweist, die während des Trennvorganges zum Bewegen des Spaltes (3) entsprechend der Bewegung der Trenneinrichtung (1) entgegengesetzt zu einander und nach dem Trennvorgang zum gezielten Abräumen ausgeschnittener gleichgroßer Teile unabhängig voneinander zur Vergrößerung des Spaltes (3) und zum Abräumen unterschiedlicher Teile in Abhängigkeit von deren Größe mit entsprechender Spaltbreite entgegengesetzt bewegbar sind.

2. Auflagevorrichtung nach Anspruch 1, **dadurch gekennzeichnet, dass** die Trägeranordnungen als Tragarme ausgebildet sind.

3. Auflagevorrichtung nach Anspruch 2, **dadurch gekennzeichnet, dass** die Tragarme teleskopartig ausfahrbar sind.

4. Auflagevorrichtung nach einem der vorangegangenen Ansprüche, **dadurch gekennzeichnet, dass** der erste und zweite Auflagetisch jeweils eine Gliederkette (12, 13) mit einer Vielzahl von Gliedern (14) mit einer oberen Flachseite, die die jeweilige Auflagefläche (15, 15') bilden, sowie eine am einen Ende jedes Auflagetisches angeordnete Umlenkeinrichtung (10, 11) aufweisen.

5. Auflagevorrichtung nach Anspruch 4, **dadurch gekennzeichnet, dass** die Gliederkette (12, 13) zur gleichzeitigen Vergrößerung der einen Auflagefläche und Verkleinerung der anderen Auflagefläche miteinander verbunden sind.

6. Auflagevorrichtung nach Anspruch 4 oder 5, **dadurch gekennzeichnet, dass** die Kettenglieder (14) als Hohlprofile ausgebildet sind.

7. Auflagevorrichtung nach Anspruch 6, **dadurch gekennzeichnet, dass** die Kettenglieder (14) auf der oberen Flachseite Öffnungen (20) aufweisen und die Hohlräume der Kettenglieder über Ventileinrichtungen (23) sukzessive miteinander verbindbar und an eine Saugeinrichtung anschließbar sind.

8. Auflagevorrichtung nach Anspruch 6, **dadurch gekennzeichnet, dass** die Hohlräume der Kettenglieder (14) über Ventileinrichtungen (23, 24) sukzessive zur Aufnahme und Durchführung einer Kühlflüssigkeit miteinander verbindbar sind.

9. Maschine zum Schneiden von plattenförmigen Materialien mittels einer Trenneinrichtung und einer Auflagevorrichtung gemäß einem der vorangegangenen Ansprüche.

10. Verfahren zum Trennen von plattenförmigen Materialien mittels einer Trenneinrichtung auf einem Auflagetisch, der einen ersten Auflagetisch (4) mit einer ersten Auflagefläche (15) und einen zweite Auflagetisch (5) mit einer zweiten Auflagefläche (15') umfasst, die voneinander beabstandet sind und einen Spalt (3) bilden, der sich zumindest unter der Trenneinrichtung (1) befindet, wobei die Trenneinrichtung während des Trennvorganges in einer X-Vorschubrichtung geradeaus und in einer Y-Vorschubrichtung quer dazu bewegt wird, mit dem folgenden Schritt:
- Bewegen des Spaltes während des Trennvorganges unter der Trenneinrichtung synchron mit der Trenneinrichtung durch Vergrößem der Auflagefläche eines Auflagetisches und gleichzeitiges Verkleinern der Auflagefläche des anderen Auflagetisches, **gekennzeichnet durch** die folgenden Schritte:
- Vergrößern des Spaltes nach dem Trennvorgang geringfügig größer als die getrennten Teile **durch** Verkleinern der Auflagefläche der Auflagetische und Bewegen dieses Spaltes zumindest in Y-Vorschubrichtung zum Aussortieren der getrennten Materialen; und
- Öffnen des Spaltes auf maximale Größe **durch** Verkleinern der Auflageflächen zum Abräumen von Materialresten.

## Claims

1. A support apparatus for mounting plate-shaped materials in a cutting-off device, the cutting-off device is movable in the X/Y direction during the cutting-off operation, and the X feed direction being rectilinear and the Y apparatus being at right angles thereto, having a first support table (4) with a first support surface (15) and a second support table (5) with a second support surface (15'), the two support tables being at a distance from one another and forming a gap (3) which is located at least under the cutting-off device (1), and the gap (3) being variable by varying the size of the first and the second support table in the Y direction, **characterized in that** each support table (4, 5) has a carrier arrangement (8, 9) fixed on one side and movable in the Y direction, which carrier arrangements (8, 9) are movable in opposition to one another during the cutting-off operation for moving the gap (3) in accordance with the movement of the cutting-off device (1) and, after the cutting-off operation, for the specific removal of cut-out parts of the same size, are movable independently of one another for enlarging the gap (3) and, for removing different parts, are movable in opposition as a function of the size of the latter with corresponding gap width.

2. The support apparatus as claimed in claim 1, **characterized in that** the carrier arrangements are designed as carrying arms.

3. The support apparatus as claimed in claim 2, **characterized in that** the carrying arms are telescopically extendable

4. The support apparatus as claimed in one of the preceding claims, **characterized in that** the first and the second support table each have a link chain (12, 13) having a multiplicity of links (14) with a top flat side which form the respective support surface (15, 15') and also a deflecting device (10, 11) arranged at one end of each support table

5. The support apparatus as claimed in claim 4, **characterized in that** the link chain (12, 13) are connected to one another for the simultaneous enlargement of the one support surface and reduction in size of the other support surface.

6. The support apparatus as claimed in claim 4 or 5, **characterized in that** the chain links (14) are designed as hollow profiles

7. The support apparatus as claimed in claim 6, **characterized in that** the chain links (14) have openings (20) on the top flat side, and the cavities of the chain links can be successively connected to one another via valve devices (23) and can be connected to a suction device

8. The support apparatus as claimed in claim 6, **characterized in that** the cavities of the chain links (14) can be successively connected to one another via valve devices (23, 24) for receiving and passing through a cooling liquid.

9. A machine for cutting plate-shaped materials by means of a cutting-off device and a support apparatus as claimed in one of the preceding claims

10. A method of cutting off plate-shaped materials by means of a cutting-off device on a support table which comprises a first support table (4) with a first support surface (15) and a second support table (5) with a second support surface (15'), said support tables being at a distance from one another and forming a gap (3) which is located at least under the cutting-off device (1), the cutting-off device being movable rectilinearly in an X feed direction during the cutting-off operation and in a Y feed direction at right angles thereto, compnsing the following step
- moving the gap during the cutting-off operation under the cutting-off device synchronously with the latter by enlarging the support surface of one support table and by simultaneously reducing the size of the support surface of the other support table, **characterized by** the following steps:
- enlarging the gap after the cutting-off operation to a slightly greater extent than the cut-off parts by reducing the size of the support surface of the support tables and moving this gap at least in the feed direction for sorting out the cut-off materials, and
- opening the gap to maximum size by reducing the size of the support surfaces for removing material residues.

## Revendications

1. Dispositif de support pour entreposer des matériaux en forme de plaque dans un dispositif de séparation, le dispositif de séparation pouvant être mobile au cours du processus de séparation dans des directions X/Y et la direction de l'avance X étant droite et la direction de l'avance Y étant transversale par rapport à celle-ci, avec une première table porte-pièce (4) munie d'une première surface de support (15) et une seconde table porte-pièce (5) munie d'une seconde surface de support (15'), les deux tables porte-pièce étant espacées l'une par rapport à l'autre et forment un intervalle ou une fente (3) qui se trouve au moins au-dessous du dispositif de séparation (1), et l'intervalle ou la fente (3) pouvant être variable en modifiant la dimension de la première et de la seconde table porte-pièce dans la direction Y, **caractérisé en ce que** chaque table porte-pièce (4, 5) présente une configuration de porteurs (8, 9) fixés unilatéralement et pouvant être déplacés dans la direction Y, qui peuvent être déplacés de manière opposée l'un par rapport à l'autre au cours du processus de séparation afin de déplacer l'intervalle ou la fente (3) conformément au mouvement du dispositif de séparation (1) et qui peuvent être déplacés de manière opposée l'un par rapport à l'autre après le processus de séparation afin de déblayer précisément les éléments découpés de même dimension indépendamment l'un de l'autre afin d'agrandir la fente (3) et de déblayer différents éléments en fonction de leur dimension avec une largeur d'intervalle correspondante.

2. Dispositif de support selon la revendication 1, **caractérisé en ce que** les configurations de porteurs sont formées comme des consoles

3. Dispositif de support selon la revendication 2, **caractérisé en ce que** les consoles sont extensibles de manière télescopique.

4. Dispositif de support selon l'une quelconque des revendications précédentes, **caractérisé en ce que** la première et la seconde tables porte-pièce présentent chacune une chaîne à maillons (12, 13) avec un grand nombre de maillons (14) avec une face supérieure plate qui forment chacune des surfaces de support (15, 15') ainsi qu'un dispositif de déviation (10, 11) disposé à une extrémité de chaque table porte-pièce.

5. Dispositif de support selon la revendication 4, **caractérisé en ce que** les chaînes à maillons (12, 13) sont reliées ensemble pour simultanément agrandir l'une des surfaces de support et réduire l'autre surface de support.

6. Dispositif de support selon la revendication 4 ou 5, **caractérisé en ce que** les maillons de la chaîne (14) sont formés comme des profils creux.

7. Dispositif de support selon la revendication 6, **caractérisé en ce que** les maillons de la chaîne (14) présentent des ouvertures (20) sur la face supérieure plate et que les espaces creux des maillons de la chaîne peuvent être reliés ensemble successivement par l'intermédiaire de dispositifs de soupapes (23) et peuvent être raccordés à un dispositif d'aspiration.

8. Dispositif de support selon la revendication 6, **caractérisé en ce que** les espaces creux des maillons de la chaîne (14) peuvent être reliés ensemble successivement par l'intermédiaire de dispositifs de soupapes (23, 24) afin de recevoir et de faire passer un liquide de refroidissement.

9. Machine pour couper des matériaux en forme de plaque au moyen d'un dispositif de séparation et d'un dispositif de support conformément à l'une des revendications précédentes.

10. Procédé pour séparer des matériaux en forme de plaque au moyen d'un dispositif de séparation sur une table porte-pièce qui comprend une première table porte-pièce (4) munie d'une première surface de support (15) et une seconde table porte-pièce (5) munie d'une seconde surface de support (15') qui sont espacées l'une de l'autre et qui forment une fente (3) qui se trouve au moins au-dessous du dispositif de séparation (1), le dispositif de séparation se déplaçant au cours du processus de séparation dans une direction de l'avance X de manière droite et dans une direction de l'avance Y transversale par rapport à celle-ci avec l'étape suivante consistant à :
- déplacer la fente au cours du processus de séparation au-dessous du dispositif de séparation de manière synchronisée avec le dispositif de séparation par l'agrandissement de la surface de support d'une table porte-pièce et la réduction simultanée de la surface de support de l'autre table porte-pièce, **caractérisé par** les étapes suivantes consistant à :
- agrandir la fente après le processus de séparation légèrement plus que les éléments séparés par la réduction de la surface de support des tables porte-pièce et le déplacement de cette fente au moins dans la direction de l'avance Y afin de trier les matériaux séparés ; et
- ouvrir la fente à la dimension maximale en réduisant les surfaces de support afin de déblayer les chutes de matériaux.
